# EUROPEAN PATENT SPECIFICATION

(11) **EP 1 022 840 B1**
(45) Date of publication and mention of the grant of the patent: **21.12.2011**
(21) Application number: 00660010.0
(22) Date of filing: 20.01.2000
(51) Int. Cl.: H02J 7/02

(54) **Controller for an inductive battery charger**
Steuerung für einen induktiven Batterielader
Contrôleur pour un chargeur inductif de batterie

(30) Priority: 20.01.1999 DE 19901983
(43) Date of publication of application: 26.07.2000
(73) Proprietor: Salcomp Oyj, 24100 Salo (FI)
(72) Inventor: Brockmann, Hans-Jürgen, 25130 Muurla (FI)
(74) Representative: Suominen, Kaisa Liisa

(56) References cited:
- EP-A- 0 817 351
- US-A- 5 536 979

## Description

The invention relates to a controller for an inductive battery charger for a battery in a mobile electrical device, for example a mobile telephone, a cordless telephone and the like. Energy is inductively transferred from the battery charger to the mobile device using an alternating magnetic field. The controller of the battery charger detects a coupled mobile device, which includes a device for inductively receiving power and consumes active power for charging. The invention makes it possible to intelligently control the inductively transmitted power in order to prevent no-load operation over an extended time and damage caused by unwanted inductive heating.

The invention is advantageously applied in particular to compact and light-weight radio telephones which include a battery with a high energy density to be completely recharged within only a few hours.

To charge a battery of this type, electrical power in the order of several watts is inductively transmitted. Energy losses during charging of the battery are a known problem which can affect the reliability. The battery requires a significant amount of current even under a no-load conditions, i.e., when the charge controller in the mobile device has concluded the charging process and/or when the mobile device is removed. Consequently, additional measures are required during continuous operation so that power is reliably dissipated. In addition, foreign objects , for example coins, metal object and the like, which exhibit electrical and/or magnetic conductivity and are accidentally exposed to the alternating field, can absorb energy from the alternating field of the battery charger. The resulting inductively generated short circuit currents and eddy currents may cause severe heating, and may therefore pose a danger to surrounding areas. Even a mobile device without an inductive coupling section may inadvertently get into the region of the alternating magnetic field and may be damaged by prolonged inductive heating. Foreign objects can also shift the resonance condition of the battery charger and thereby significantly increase the intrinsic power consumption, so that the battery charger can be destroyed due to inadequate heat dissipation.

Document US 5,536,979 discloses a system which comprises a first electric circuit for transferring AC electric power to a second electric circuit which is mounted within a portable device such that the second electric circuit and the device are separable from the first electric circuit. The electric circuits comprise coils coupled around magnetic cores which are substantially aligned for forming a completed magnetic circuit for reducing stray magnetic fluxes. The system further comprises means for deactivating the AC power signal to the first coil when the second magnetic core is removed from alignment wherein the means for deactivating comprises a circuit for detecting whether the second magnetic core is removed from alignment by monitoring a response to the AC power signal.

Document EP 0 817 351 discloses a charger for transmitting power to a cordless device by making use of mutual induction. The charger and the cordless device comprise resonance circuits consisting of capacitors connected in parallel with a primary side coil and a secondary side coil, respectively. The resonant voltage level in the resonance circuit of the charger is switched between a high level and a low level depending on whether the cordless device is set in the charger or not. The presence of the cordless device in the charger is detected by monitoring change in oscillation amplitude in the charger.

The patent application DE 197 41 279, which has a publication date later than the filing date of the present application, discloses a battery charger which switches to a power-saving wait state under no-no-load operation or when a foreign object affects the alternating magnetic field. The battery charger includes a self-oscillating push-pull oscillator. The primary inductive coupling section for generating the alternating magnetic field is formed by a U-shaped ferrite core with two spaced-apart primary windings which are supplemented in each push-pull branch of the oscillating to form a separate resonance circuit. During the charging process, the primary windings face two corresponding secondary windings in the mobile device, which also form a part of at least one resonance circuit. According to an advantageous embodiment described in the supplementary patent application DE 198 36 401, each of the secondary windings in the mobile device is connected to a separate circuit capacitance and also forms a separate resonance circuit. The resonance frequency of both circuits is at least very close to the oscillation frequency of the push-pull oscillator. Each resonance circuit is decoupled via a dedicated charge rectifier.

The solution is based on the concept that only a coupled mobile device with corresponding secondary windings can uniformly load the primary windings of the self-oscillating push-pull oscillator at the time the battery is being charged. Foreign objects located in the region of the magnetic field, on the other hand, cause differences in the operating characteristics of the push-pull branches.

Consequently, a controller in the battery charger can detect the coupled mobile device based on the match of electrical operating parameters of the push-pull branches of the push-pull oscillator. The operating currents in both push-pull branches, which exhibit a minimum under no-load conditions, are measured to determine the no-load characteristics. Electrical parameters are measured at each of the impedances arranged in each of the push-pull branches, and an average value is formed. A comparator compares the average value with a reference voltage and generates an output voltage which switches the push-pull oscillator into the low-power wait state, if the operating currents fall below a minimal value under a no-load condition or a small load condition. A periodic test is performed at time intervals T1 to determine if in the meantime the primary windings have become uniformly loaded. However, practical embodiments of the solution have demonstrated that it is difficult to manufacture the windings with the required precision due to the small number of turns and the small size of the U-shaped cores. As a result, different voltage and current levels are observed, even if the load of the push-pull branches is balanced. Unless the symmetry is adjusted, the proposed solution therefore does not operate satisfactorily and is unable to reliably detect a coupled device.

The patent application DE 198 37 675.8 which has not yet been published, also proposes a controller for a battery charger which detects a coupled mobile device based on the AC load. The controller is based on the concept that the oscillation frequency of a self-oscillating push-pull oscillator strongly depends on the loading of the inductive coupler by the battery charging current. For this reason, a switching regulator is placed in the mobile device between the charge rectifiers and the battery. The switching regulator switches the battery charging current synchronously with a pulse frequency. Power is drawn from the battery charger in the form of oscillation packets. The controller identifies the oscillation packets as an alternating voltage and uses the packets to switch the battery charger from the wait state to a charge state which delivers full power.

The switching regulator of a radio telephone, however, requires more space and material which is disadvantageous in view of the modern compact design of such telephones.

It is the object of the invention to overcome the aforedescribed disadvantages and to provide a controller for a battery charger which can reliably detect the coupled mobile device and the charge state of the battery without requiring additional components in the mobile device, and to switch the battery charger from a wait state with a reduced power output to a charge state with full power output.

The objects of the invention are reached by changing the operation frequency of the oscillator of the charger for a certain period of time, and observing any possible changes in the operating current of the oscillator due to the reaction of the resonance circuit of a possibly coupled mobile device to determine the presence of such a device.

The method according to the invention is characterized by that, which is specified in the characterizing part of the independent method claim. The circuit according to the invention is characterized by that, which is specified in the characterizing part of the independent claim directed to a circuit. The battery charger according to the invention is characterized by that, which is specified in the characterizing part of the independent claim directed to a battery charger. The dependent claims describe further advantageous embodiments of the invention.

The solution of the object of the invention is also based on a controller which controls inside the battery charger a self-oscillating power oscillator having at least one resonance circuit in the output circuit. The mobile device includes at least one resonance circuit in the inductive coupler section. A self-oscillating power oscillator of this type is described, for example in the patent application DE 197 41 279 which was not yet published on the date the present patent application was filed.

Outside the time period during which the charging unit charges the battery of the coupled mobile device, the controller maintains the oscillator in a pulsed wait state at a significantly reduced output power.

For solving the object according to the invention, the controller periodically and for a short test time interval alters the oscillation frequency of the oscillator from a first value to a second value and observes the resulting changes in the operating current of the oscillator, such as the change of magnitude of the operating current and the direction of the change of the operating current.

The invention is based on the concept that the operating current of the oscillator of a battery charger, which is coupled to a mobile device receiving the charging current, changes in a different direction in response to a change, in particular a decrease, in the oscillation frequency than if a foreign object were present in the alternating magnetic field. When a charging current flows in the coupled mobile device, the operating current of the oscillator decreases significantly relative to its initial value with decreasing the oscillating frequency, so that a monitoring electronics can respond to this change in the operating current in a unique manner. However, if the control electronics in the mobile device stops to supply a charging current to the battery because the battery is fully charged, then the oscillator operating current does not change at all or changes only in a minor way during the duration of the test. Such a change may easily be suppressed by the monitoring circuit.

However, if a metallic foreign object instead of the mobile device is located in the region of the alternating magnetic field, then the oscillator operating current remains unchanged or may even slightly increase when the oscillation frequency decreases.

The aforedescribed characteristics of the oscillator operating current applies only to an oscillator circuit which generates a substantially constant voltage amplitude in the primary windings independent of the oscillation frequency. The characteristics can be explained as follows for different types of loads:

Since at a constant voltage amplitude the current in the primary windings increases with decreasing oscillation frequency due to the decrease in the winding impedance, the magnetic flux density increases in the magnetic circuit of the coupler section. With decreasing oscillation frequency, a metallic foreign object located in the alternating magnetic field is therefore exposed to a greater flux density, which causes an increase of the eddy current losses in the foreign object and thus a higher effective power consumption of the oscillator. The oscillator operating current therefore increases during the test duration.

On the other hand, if the primary inductive coupler section is coupled to the secondary coupler section of a mobile device, then a maximum power is transmitted only if the primary and the secondary circuits are in resonance with respect to each other. This resonance condition is disturbed when the frequency of the oscillator decreases, so that significantly less power is transmitted to the secondary coupler section. This effect can be exploited up to a certain load level in the mobile device. If this value is exceeded, for example due to a short circuit of the battery, then the primary coupler section does not resonate at any of the two values of the oscillating frequency. As a result, the power received by the secondary coupler section is limited in both situations. The received power also increases again with decreasing frequency.

Consequently, the oscillator operating current decreases during the test duration in a noticeable way only, if the battery charger is coupled to a mobile device containing a chargeable battery.

Accordingly, the aforedescribed effect provides also a method for determining the state of the battery, wherein the battery charger remains in the wait state or switches back to the wait state at a reduced power level, if the battery in the mobile device is already charged or has a short circuit.

According to an advantageous embodiment of the invention, the controller for the battery charger includes means for measuring the actual oscillator operating current, a memory device which can simultaneously provide the different consecutive values of the oscillator operating current, and a comparator circuit which compares the values of the oscillator operating currents at the different oscillator frequencies and indicates by outputting a control voltage the presence of a mobile device which is coupled to the battery charger and contains a chargeable battery.

The invention will be described hereinafter with reference to certain specific embodiments. The corresponding drawings show in:
Fig. 1 a schematic circuit block diagram of a battery charger CU with corresponding elements of the controller,
Fig. 2 a detailed diagram of the self-oscillating oscillator shown in Fig. 1 with means for changing the oscillation frequency,
Fig. 3 a flow chart of a method according to an advantageous embodiment of the invention, and
Fig. 4 a flow chart of a further method according to a further advantageous embodiment of the invention.

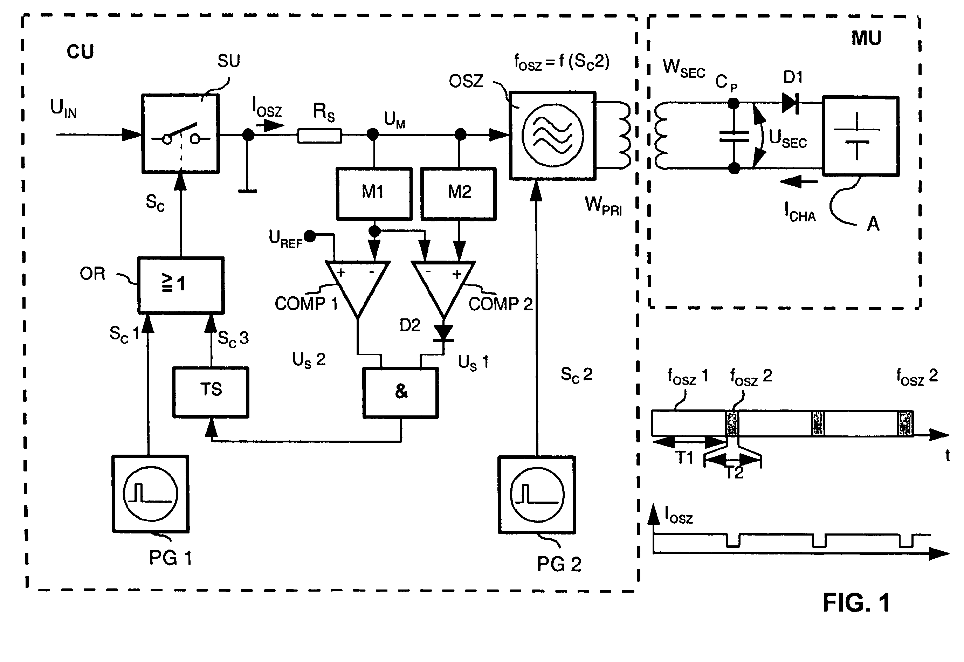

Fig. 1 shows a possible solution for the controller together with the other components of the battery charger CU and a mobile device coupled thereto, which in the present embodiment is a mobile telephone MU. Only those functional elements which are necessary for charging the battery A, are shown.

It will be assumed that during use, the battery charger of the invention is connected to a voltage source, for example the local power mains or the onboard power supply of an automobile. The voltage source supplies a continuous DC input voltage U_{IN} to a power oscillator OSZ having at least one primary winding W_{PRI} representing the primary section of an inductive coupler. The supply of the oscillator current I_{OSZ} to the power oscillator OSZ can be interrupted by applying a switching signal S_{C} to a primary switching unit SU. After the control signal S_{C} has switched the primary switching unit SU on, the power oscillator OSZ oscillates with an oscillation frequency f_{OSZ} 1 having a frequency in the range between 500 and 2000 kHz, whereby the primary section of the inductive coupler produces a alternating magnetic field.

This alternating field couples to the secondary section of the inductive coupler in the mobile telephone MU indicated by a secondary winding W_{SEC}. A charge rectifier D1 is connected in series with the secondary section. The alternating magnetic field produces an induction current in the secondary winding W_{SEC}. An alternating voltage U_{SEC} having a frequency equal to the actual oscillation frequency is produced at the capacitor C_{P}, so that a rectified charging current I_{CHA} is provided for charging the battery A. The controller further includes a level generator PG 1 to ensure that the power oscillator OSZ switches to full power only if a mobile telephone MU with a chargeable battery is coupled to the battery charger CU. The level generator PG 1 periodically every few seconds closes the switching unit SU for a time duration T_{S} by way of an extremely low frequency pulse signal S_{C} 1 which is applied via an OR-circuit OR. The ON/OFF ratio of the level generator PG 1 is selected so that the switching unit SU activates the power oscillator OSZ to generate only those oscillation packets which are significantly shorter than the turn-off time of the power oscillator OSZ. This arrangement significantly reduces the power supplied in the wait state in comparison to the power supplied at full power.

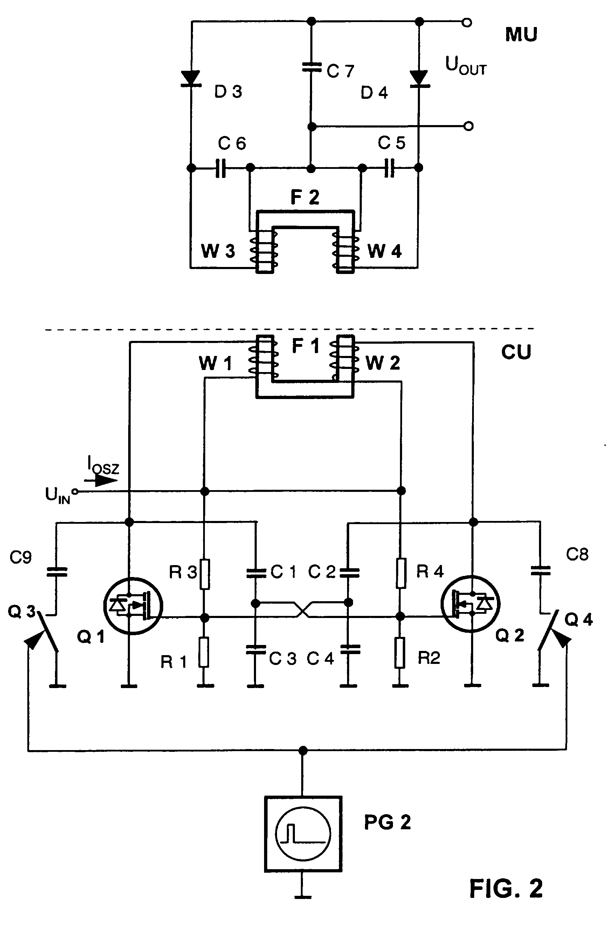

Unlike the level generator PG 1, the pulse signal S_{C} 2 of the level generator PG 2 operates the switches Q3, Q4 (Fig. 2) in the power oscillator OSZ, which lower the oscillation frequency from a frequency f_{OSZ} 1 to a frequency f_{OSZ} 2 during a test duration T2. Advantageously, the oscillation frequency f_{OSZ} 2 is selected to be approximately 10% lower than f_{OSZ} 1. Since the transmitted power for charging the battery is reduced during the test duration T2, the test duration T2 is also much shorter than the duration T1 during which the power oscillator OSZ operates at the oscillation frequency f_{OSZ} 1.

A sensor resistor R_{S} is connected in the current supply to the power oscillator OSZ. This sensor resistor R_{S} in conjunction with the memories M1 and M2, the comparators COMP1 and COMP2 and the AND-circuit & forms the portion of the controller which detects the mobile telephone MU. An oscillator operating current (I_{OSZ}) which depends on the power supplied by the power oscillator OSZ, flows through the sensor resistor R_{S} and produces a measurement voltage U_{M} after the sensor resistor R_{S}. The memories M1 and M2 may be simple R/C circuits having different time constants to store different instant values of the measurement voltage U_{M}. The memory M1 has a short charge time constants as well as a short discharge time constant. Both time constants are selected so that even if the frequency changes from the high oscillation frequency to the low oscillation frequency f_{OSZ} 2, the memory M1 stores the actual measurement voltage U_{M T2} within a small number of oscillations, i.e., reliably within the test duration T2. The memory M1 essentially averages changes in the measurement voltage U_{M} only during several oscillations of the oscillation frequency f_{OSZ} 1, f_{OSZ} 2 in order to suppress errors caused, for example, by noise. Conversely, the memory M2 has a large charge time constant and also a large discharge time constant, so that the memory M2 is never recharged to a changed value of the measurement voltage U_{M T2} during the test time T2. In other words, the output of the memory M1 essentially follows the changes in the measurement voltage, whereas the output of the memory M2 produces a value which is averaged over a large number of oscillations at the high oscillation frequency f_{OSZ} 1. The different consecutive values of the oscillator operating current (I_{OSZ}) are provided concurrently at the outputs of the memories M1 and M2.

The comparator COMP2 therefore reacts to all changes in the oscillator operating current (I_{OSZ}) caused by a decrease in the oscillation frequency f_{OSZ} 1 by generating a switching voltage U_{S} 1. The switching voltage U_{S} 1 becomes negative when the oscillator operating current (I_{OSZ}) increases and positive when the oscillator operating current (I_{OSZ}) decreases. Since a switching voltage U_{S} 1 is required which can positively identify a mobile telephone MU and since only a mobile telephone MU uses less power during the time T2, a diode D2 is provided to ensure that only the positive switching voltage U_{S} 1 is supplied to the AND-circuit &.

A comparator COMP1 which compares the output of the memory M1 with a reference voltage U_{REF}, is connected in parallel with the comparator COMP2. The comparator COMP1 produces a switching voltage U_{S} 2 only when the absolute value of the oscillator operating current (I_{OSZ}) exceeds a minimum value. In this way, a battery charger is also switched back into the wait state if the battery is fully charged. The AND-circuit & therefore transmits a signal only if the comparator COMP1 detects a predetermined absolute minimum value of the oscillator operating current (I_{OSZ}) and the comparator COMP2 detects a decreasing oscillator operating current (I_{OSZ}) during a duration T2.

Since this condition is only satisfied during the duration T2, the switching unit SU would never be able to operate continuously due to the limited time duration of the pulse signal S_{C} 1. To achieve a continuous operation, a timing circuit TS is connected between the OR-circuit OR and the AND-circuit &. The timing circuit TS is set by the output signal of the AND-circuit & and holds the switching unit SU in a closed position for a time duration which is somewhat longer than the time T0 = T1 + T2. The timing circuit TS is reset during the following test duration T2, causing the power oscillator OSZ to operate continuously.

To enable detection during the test duration T2, the level generator 1 has to switch the power oscillator OSZ on for a time duration TS which is longer than the time T0, so that both measurement voltages are reliably provided.

In a further advantageous embodiment of the invention, the measurement voltage U_{M} is filtered before leading the voltage to the memories M1 and M2. The filtering can be performed in many different ways. For example, it is advantageous to use a lowpass filter before the memories to reduce the effect of noise, or for example a bandpass filter. Further, in a still further advantageous embodiment of the invention an ac-coupled filter is used. The ac-coupling of a filter allows easy detection of a very small voltage decrease during the measurement time, since the normal DC level of the measurement voltage does not affect an ac-coupled measurement. Therefore, the test duration can also be made very short. However, the circuitry for detecting the voltage decrease indicating that a mobile device is coupled to the charger is in such an embodiment necessarily different from that shown in figure 1, which shows an embodiment with dc-coupled memories M1 and M2. Therefore, the circuit diagram of figure 1 is only an example of an advantageous embodiment of the invention, and the invention is not limited to the circuit of figure 1. Circuitry for detecting a decrease in a voltage level is straightforward to devise for a man skilled in the art, wherefore such circuits are not elaborated further here.

Fig. 2 is a more detailed diagram of the oscillator OSZ of Fig. 1. The oscillator OSZ is implemented as a self-oscillating push-pull oscillator with the switches Q1 and Q2. A U-shaped ferrite core F1 with two spaced-apart primary windings W1 and W2 forms the primary inductive coupling section for generating the alternating magnetic field. In each push-pull branch of the oscillator, the primary windings W1 and W2 are supplemented by capacitors C1 to C4 to form a separate resonance circuit. During the charging process, two corresponding secondary windings W3 and W4 in the mobile device which are connected with two separate circuit capacitors C5 and C6, face the primary windings W1 and W2. The resonance frequencies of the two secondary circuits are at least close to the oscillation frequency f_{OSZ} 1 of the push-pull oscillator. Each resonance circuit is decoupled via a dedicated charge rectifier.

To decrease the oscillation frequency f_{OSZ}, the electronic switches Q3 and Q4 connect the capacitors C8 and C9 in parallel with the capacitors C1 to C4 of the primary oscillator circuit.

Figure 2 also illustrates one possible configuration of the charging circuit in a mobile device MU. Figure 2 shows rectifier diodes D3 and D4, capacitors C5 and C6 for forming a resonance circuit with windings W4 and W3 respectively, and capacitor C7 for smoothing the output voltage of the circuit. However, this is only an example of many different circuits. For example, the diodes D3 and D4 could as well be connected in the reverse polarity to that shown in Fig. 2. The invention is not limited in any way to such a mobile device circuit having resonance circuits as shown in Fig. 2.

According to a further aspect of the invention, a circuit for an inductive battery charger for detecting if a mobile device to be charged is coupled to the battery charger is provided. The circuit is applicable in chargers having a self-oscillating power oscillator with at least one resonance circuit in the output circuit of the battery charger. According to an advantageous embodiment of the invention the circuit is arranged to monitor the magnitude of the operating current of the oscillator, the circuit is arranged to change the oscillation frequency of the oscillator from a first frequency to a second frequency for a period having a predetermined length, and the circuit is arranged to determine if a mobile device is coupled to the battery charger on the basis of changes in the magnitude of the operating current of the oscillator resulting from said change of the oscillation frequency of the oscillator.

According to a further advantageous embodiment of the invention, said second frequency is lower than said first frequency.

According to a still further advantageous embodiment of the invention, said second frequency is lower than said first frequency.

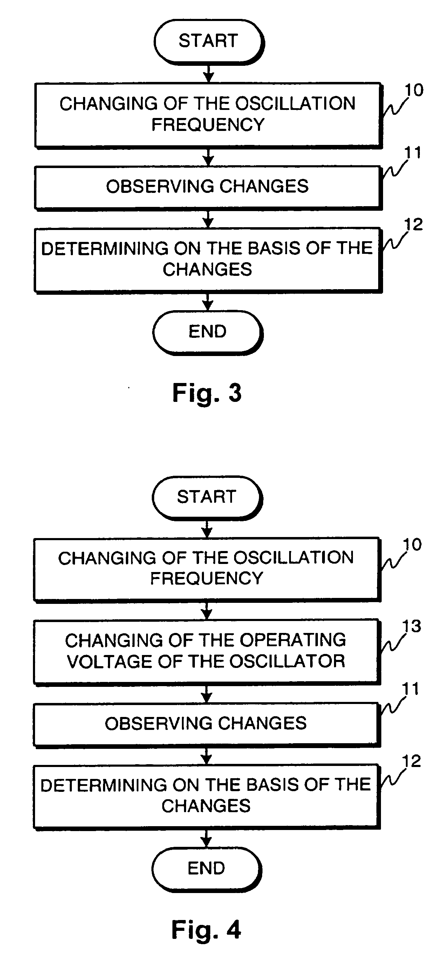

According to a still further aspect of the invention a method for detecting if a mobile device is coupled to a battery charger is provided. Figure 3 illustrates a method according to an advantageous embodiment of the invention. The method is applicable with chargers having a self-oscillating power oscillator with at least one resonance circuit in the output circuit of the charger, and being adapted to inductively charge mobile devices having a resonance circuit in the charging circuit of the mobile device. According to an advantageous embodiment of the invention, the method comprises at least the steps of
- changing 10 of the oscillation frequency of the oscillator from a first frequency to a second frequency for a predetermined period,
- observing 11 changes in the operating current of the oscillator as a response to said changing of frequency, and
- determining 12 on the basis of said change in the operating current if a mobile device is coupled to the charger.

According to a further advantageous embodiment of the invention, said second frequency is lower than said first frequency.

According to a still further advantageous embodiment of the invention, said second frequency is lower than said first frequency.

According to a still further advantageous embodiment of the invention, the method further comprises the step of changing the operating voltage of the oscillator for said predetermined period.

Whether the operation frequency of the oscillator should be changed to a higher frequency or to a lower frequency during the test period than the normal operating frequency depends on the characteristics of the particular application of the invention. The most important characteristics in this aspect are the operating frequency of the oscillator and the resonance frequency of the resonance circuits in the charger and in the mobile device to be charged. Typically, the operating frequency is not exactly at the resonance frequency, but has a small offset to one or the other side of the operating frequency, being typically lower than the resonance frequency. The reason for this offset is the practical consideration, that if the operating frequency would coincide with the resonance frequency, the output voltage at the mobile device side would be quite high in a no load condition. The high output voltage is due simply to operation at the resonance frequency of the resonance circuit of the mobile device. Let us consider the case, in which the operation frequency is lower than the resonance frequency, say 800 kHz and 1 MHz respectively. If the change in the frequency during the test period is small compared to the frequency difference, both an increase and a decrease of the operating frequency for the test period give similar results, i.e. a change in the operating current of the oscillator is observed. However, if the change in the frequency is large and the change is to the direction of increasing frequency, the result is not quite as clear. For example, if the change is 400 kHz in the present example, the test frequency would be 1.2 MHz. Now, 1.2 MHz is equally far away from the resonance frequency than 800 kHz, only to the other side, wherefore the response from the resonance circuits would be substantially the same as at 800 kHz, whereby no change in the operating current of the oscillator would be observed. Therefore, in order to allow the use of rather loose tolerances in the component values, it is advantageous to use a decrease of frequency for the test period if the operating frequency is below the resonance frequency, so that the frequency would not come near to or cross over the resonance frequency during the test period. Similarly, an increase of frequency is advantageous if the operation frequency is above the resonance frequency.

Depending on the structure of the charging circuit in the mobile device, the charge level of the battery of the mobile device may affect the reaction of the charging circuit to changes of the oscillation frequency. For example, if the charging circuit of a mobile device MU has the exemplary structure shown in Fig. 2, the charging state of the battery affects quite a lot the responses observed in the charger, as was described previously in this specification. If the voltage level of the battery is very low compared to the voltage level which would be present at the output of the charging circuit of the mobile unit without any loading, the battery loads the resonance circuit so much that the resonance properties change, whereby the detection circuit might not detect the mobile device any more. If the battery is nearly full, the battery draws only a little current, whereby a change in the operating frequency causes only a small change in the current drawn from the charger, whereby the detection circuit might not detect the change. Therefore, the charger might in some cases detect only those mobile devices whose batteries have a charge level above a lower limit and below an upper limit. This effect may in practice have a negative effect on performance of the battery detection circuit as described previously in this application. These limits naturally depend on the component values of components in both the charger and the mobile device, and the structure of circuits in the devices, whereby no explicit values can be given for these limits.

To overcome this problem, in an advantageous embodiment of the invention the operating voltage of the oscillator of the charger is changed during at least some test periods. Changing of the operating voltage causes a change in the upper and lower limits of the detectable charge range of the battery of the mobile device. If the operating voltage of the oscillator is increased, the detection limits also increases, whereby even a nearly full battery may fall within the detection range. If the operating voltage of the oscillator is decreased, the lower limit of the detection range decreases as well, whereby even a nearly empty battery may end up being within the detection range. Therefore, it is advantageous to perform some test periods at a higher oscillator voltage level than the normal level, and some at a lower oscillator voltage level, in order to span a wider range of charge levels. It is straightforward for a man skilled in the art to construct a circuit for performing changes in the operating voltage of the oscillator for the duration of test periods, whereby such circuits need not be further elaborated here.

Figure 4 illustrates a further method according to an advantageous embodiment of the invention. The method is applicable with chargers having a self-oscillating power oscillator with at least one resonance circuit in the output circuit of the charger, and being adapted to inductively charge mobile devices having a resonance circuit in the charging circuit of the mobile device. According to an advantageous embodiment of the invention, the method comprises at least the steps of
- changing 10 of the oscillation frequency of the oscillator from a first frequency to a second frequency for a predetermined period,
- changing 13 the operating voltage of the oscillator for said predetermined period,
- observing 11 changes in the operating current of the oscillator as a response to said changing of frequency, and
- determining 12 on the basis of said change in the operating current if a mobile device is coupled to the charger.

It is evident for a man skilled in the art that the test periods can be repeated with an accurate periodicity as well as aperiodically, since the times between the test periods do not affect the detection results. The repeating of the test periods is merely a matter of practical considerations pertaining to particular characteristics of a particular application of the invention.

## Claims

1. An inductive battery charger comprising a circuit for detecting if a mobile device to be charged is coupled to the battery charger (CU), the charger having a self-oscillating power oscillator (OSZ) with at least one resonance circuit (W1, C1, C3 and W2, C2, C4) in the output circuit of the battery charger, **characterized in that** the circuit is arranged to monitor the magnitude of the operating current of the oscillator, the circuit is arranged to change the oscillation frequency of the oscillator from a first frequency to a second frequency for a period having a predetermined length, and the circuit is arranged to determine if a mobile device is coupled to the battery charger on the basis of changes in the magnitude of the operating current of the oscillator resulting from said change of the oscillation frequency of the oscillator.

2. An inductive battery charger according to claim 1, **characterized in that** said second frequency is lower than said first frequency.

3. An inductive battery charger according to claim 1, **characterized in that** said second frequency is higher than said first frequency.

4. An inductive battery charger according to claim 1, **characterized by**:
- means (RS) for measuring the actual oscillator operating current (I_{OSZ}),
- storage means (M1, M2) which store concurrently the different consecutive values of the oscillator operating current (I_{OSZ}), and
- a first comparator circuit (COMP 2) which compares the values of the oscillator operating currents at the different oscillator frequencies and indicates by outputting a control voltage when a mobile device is coupled to the battery charger, wherein the mobile device contains a chargeable battery.

5. An inductive battery charger according to claim 1, **characterized in that** it lowers the oscillation frequency (f_{OSZ}) of the oscillator by adding additional capacitors (C8, C9) to the circuit capacitors (C1, C2, C3, C4) of the primary resonance circuits.

6. An inductive battery charger according to claim 1, **characterized by** a second comparator circuit (COMP 1) which determines the absolute value of the oscillator operating current and by an AND-circuit (&) which transmits a switching signal only in the event that the first comparator circuit (COMP 2) has determined a decrease in the oscillator operating current (I_{OSZ}) during said period having a predetermined length (T2) and the second comparator circuit (COMP 1) has determined a minimum value for the oscillator operating current (I_{OSZ}).

7. A method for detecting if a mobile device is coupled to a battery charger, the charger having a self-oscillating power oscillator (OSZ) with at least one resonance circuit (W1, C1, C3 and W2, C2, C4) in the output circuit of the battery charger, the charger being adapted to inductively charge mobile devices having a resonance circuit in the charging circuit of the mobile device, **characterized in that** the method comprises at least the steps of
- changing of the oscillation frequency of the oscillator from a first frequency to a second frequency for a predetermined period,
- observing changes in the operating current of the oscillator as a response to said changing of frequency, and
- determining on the basis of said change in the operating current if a mobile device is coupled to the charger.

8. A method according to claim 7, **characterized in that** said second frequency is lower than said first frequency.

9. A method according to claim 7, **characterized in that** said second frequency is higher than said first frequency.

10. A method according to claim 7, **characterized in that** the method further comprises the step of changing the operating voltage of the oscillator for said predetermined period.

## Patentansprüche

1. Induktiver Batterielader mit einer Schaltung zum Erkennen, ob ein aufzuladendes Mobilgerät an den Batterielader (CU) gekoppelt ist, wobei der Lader einen selbstschwingenden Leistungsoszillator (OSZ) mit zumindest einem Resonanzkreis (W1, C1, C3 und W2, C2, C4) im Ausgangskreis des Batterieladers hat, **dadurch gekennzeichnet, dass** die Schaltung angeordnet ist, die Größe des Betriebsstroms des Oszillators zu überwachen, die Schaltung angeordnet ist, die Schwingfrequenz des Oszillators für einen Zeitraum mit vorbestimmter Länge von einer ersten Frequenz auf eine zweite Frequenz zu ändern, und die Schaltung angeordnet ist, auf der Grundlage von Änderungen der Größe des Betriebsstroms des Oszillators, die aus der Änderung der Schwingfrequenz des Oszillators resultieren, zu bestimmen, ob ein Mobilgerät an den Batterielader gekoppelt ist.

2. Induktiver Batterielader nach Anspruch 1, **dadurch gekennzeichnet, dass** die zweite Frequenz niedriger als die erste Frequenz ist.

3. Induktiver Batterielader nach Anspruch 1, **dadurch gekennzeichnet, dass** die zweite Frequenz höher als die erste Frequenz ist.

4. Induktiver Batterielader nach Anspruch 1, **gekennzeichnet durch**:
- Mittel (RS) zum Messen des tatsächlichen Betriebsstroms (I_{OSZ}) des Oszillators,
- Speichermittel (M1, M2), die gleichzeitig die verschiedenen aufeinander folgenden Werte des Betriebsstroms (I_{OSZ}) des Oszillators speichern, und
- eine erste Komparatorschaltung (COMP 2), welche die Werte der Betriebsströme des Oszillators bei den verschiedenen Schwingfrequenzen vergleicht und **durch** Ausgeben einer Kontrollspannung anzeigt, wann ein Mobilgerät an den Batterielader gekoppelt ist, wobei das Mobilgerät eine aufladbare Batterie enthält.

5. Induktiver Batterielader nach Anspruch 1, **dadurch gekennzeichnet, dass** er die Schwingfrequenz (f_{OSZ}) des Oszillators senkt, indem er den Kondensatoren (C1, C2, C3, C4) des primären Resonanzkreises zusätzliche Kondensatoren (C8, C9) hinzufügt.

6. Induktiver Batterielader nach Anspruch 1, **gekennzeichnet durch** eine zweite Komparatorschaltung (COMP 1), welche den absoluten Wert des Betriebsstroms des Oszillators bestimmt, und **durch** einen UND-Kreis (&), der nur dann ein Schaltsignal ausgibt, wenn die erste Komparatorschaltung (COMP 2) eine Verringerung des Betriebsstroms (I_{OSZ}) des Oszillators während des Zeitraums mit vorbestimmter Länge erkannt hat und die zweite Komparatorschaltung (COMP 1) einen Minimalwert des Betriebsstroms des Oszillators (I_{OSZ}) erkannt hat.

7. Verfahren zum Erkennen, ob ein Mobilgerät an einen induktiven Batterielader gekoppelt ist, wobei der Lader einen selbst schwingenden Leistungsoszillator (OSZ) mit zumindest einem Resonanzkreis (W1, C1, C3 und W2, C2, C4) im Ausgangskreis des Batterieladers hat, und wobei der Lader ausgelegt ist, um Mobilgeräte mit einem Resonanzkreis im Ladekreis des Mobilgeräts induktiv aufzuladen, **dadurch gekennzeichnet, dass** das Verfahren zumindest die folgenden Schritte aufweist:
- Ändern der Schwingfrequenz des Oszillators von einer ersten Frequenz auf eine zweite Frequenz für einen vorbestimmten Zeitraum,
- Beobachten von Änderungen des Betriebsstroms des Oszillators als Reaktion auf das Ändern der Frequenz, und
- Erkennen, ob ein Mobilgerät an den Lader gekoppelt ist, auf der Grundlage der Änderung des Betriebsstroms.

8. Verfahren nach Anspruch 7, **dadurch gekennzeichnet, dass** die zweite Frequenz niedriger als die erste Frequenz ist.

9. Verfahren nach Anspruch 7, **dadurch gekennzeichnet, dass** die zweite Frequenz höher als die erste Frequenz ist.

10. Verfahren nach Anspruch 7, **dadurch gekennzeichnet, dass** das Verfahren des Weiteren den Schritt des Änderns der Betriebsspannung des Oszillators für den vorbestimmten Zeitraum aufweist.

## Revendications

1. Chargeur inductif de batterie comprenant un circuit permettant de détecter si un dispositif mobile à charger est couplé au chargeur de batterie (CU), le chargeur comportant un oscillateur de puissance auto-oscillant (OSZ) équipé d'au moins d'un circuit de résonance (W1, C1, C3 et W2, C2, C4) dans le circuit de sortie du chargeur de batterie, **caractérisé en ce que** le circuit est agencé pour contrôler l'intensité du courant de fonctionnement de l'oscillateur, **en ce que** le circuit est agencé pour faire passer la fréquence d'oscillation de l'oscillateur d'une première fréquence à une seconde fréquence pendant une période présentant une longueur prédéterminée, et **en ce que** le circuit est agencé pour déterminer si un dispositif mobile est couplé au chargeur de batterie sur la base des variations de l'intensité du courant de fonctionnement de l'oscillateur résultant de ladite variation de la fréquence d'oscillation de l'oscillateur.

2. Chargeur inductif de batterie selon la revendication 1, **caractérisé en ce que** ladite seconde fréquence est plus basse que ladite première fréquence.

3. Chargeur inductif de batterie selon la revendication 1, **caractérisé en ce que** ladite seconde fréquence est plus élevée que ladite première fréquence.

4. Chargeur inductif de batterie selon la revendication 1, **caractérisé par**:
- des moyens (RS) permettant de mesurer le courant réel de fonctionnement de l'oscillateur (I_{OSZ}),
- des moyens de mémoire (M1, M2) qui enregistrent simultanément les différentes valeurs consécutives du courant de fonctionnement de l'oscillateur (I_{OSZ}), et
- un premier circuit de comparateur (COMP 2) qui compare les valeurs des courants de fonctionnement de l'oscillateur aux différentes fréquences de l'oscillateur et indique par la délivrance d'une tension de commande quand un dispositif mobile est couplé au chargeur de batterie, dans lequel le dispositif mobile contient une batterie rechargeable.

5. Chargeur inductif de batterie selon la revendication 1, **caractérisé en ce qu'**il abaisse la fréquence d'oscillation (f_{OSZ}) de l'oscillateur en ajoutant des condensateurs supplémentaires (C8, C9) aux condensateurs de circuit (C1, C2, C3, C4) des circuits primaires de résonance.

6. Chargeur inductif de batterie selon la revendication 1, **caractérisé par** un second circuit de comparateur (COMP 1) qui détermine la valeur absolue du courant de fonctionnement de l'oscillateur et par un circuit-ET (&) qui transmet un signal de commutation seulement dans le cas où le premier circuit comparateur (COMP 2) a déterminé une diminution du courant de fonctionnement de l'oscillateur (I_{OSZ}) pendant ladite période présentant une durée prédéterminée (T2) et où le second circuit de comparateur (COMP 1) a déterminé une valeur minimale pour le courant de fonctionnement de l'oscillateur (I_{OSZ}).

7. Procédé permettant de détecter si un dispositif mobile est couplé à un chargeur de batterie, le chargeur comportant un oscillateur de puissance auto-oscillant (OSZ) équipé d'au moins un circuit de résonance (W1, C1, C3 et W2, C2, C4) dans le circuit de sortie du chargeur de batterie, le chargeur étant adapté pour charger de façon inductive des dispositifs mobiles comportant un circuit de résonance dans le circuit de charge du dispositif mobile, **caractérisé en ce que** le procédé comprend au moins les étapes comprenant le fait de :
- faire passer la fréquence d'oscillation de l'oscillateur d'une première fréquence à une seconde fréquence pendant une période prédéterminée,
- observer les variations du courant de fonctionnement de l'oscillateur en réponse à ladite variation de fréquence, et
- déterminer sur la base de ladite variation du courant de fonctionnement si un dispositif mobile est couplé au chargeur.

8. Procédé selon la revendication 7, **caractérisé en ce que** ladite seconde fréquence est plus basse que ladite première fréquence.

9. Procédé selon la revendication 7, **caractérisé en ce que** ladite seconde fréquence est plus élevée que ladite première fréquence.

10. Procédé selon la revendication 7, **caractérisé en ce que** le procédé comprend, de plus, l'étape consistant à modifier la tension de fonctionnement de l'oscillateur pendant ladite période prédéterminée.
